# EUROPÄISCHE PATENTANMELDUNG

(11) **EP 1 717 566 A1**
(43) Veröffentlichungstag der Anmeldung: **02.11.2006**
(21) Anmeldenummer: 05103341.3
(22) Anmeldetag: 25.04.2005
(51) Int. Cl.: G01K 17/06, G01K 1/00, G01N 25/48

(54) **Thermoanalytischer Sensor**

(71) Anmelder: Mettler-Toledo AG, 8606 Greifensee (CH)
(72) Erfinder: Hütter, Thomas, 5443, Niederrohrdorf (CH); Zumbach, Melchior, 5600, Lenzburg (CH)

(57) **Zusammenfassung**

Ein thermoanalytischer Sensor für kalorimetrische Messungen wirkt mit einer Temperier-Vorrichtung zusammen und umfasst mindestens eine auf dem Sensor ausgebildete Messposition und ein Temperatur-Messelement. Zwischen dieser Messposition und der Temperier-Vorrichtung bildet sich ein Wärmestrompfad aus. Der Sensor besteht im Wesentlichen aus einer strukturierten Mehrlagenschicht, welche durch Sinterung in einem einzigen Brennvorgang entstanden ist. Die strukturierte Mehrlagenschicht umfasst eine Vielzahl von Lagen, welche vor dem Sintern individuell strukturiert werden können, wodurch der Sensor individuell angepasst und gestaltet werden kann.

## Beschreibung

Die Erfindung betrifft einen thermoanalytischen Sensor für kalorimetrische Messungen.

Kalorimetrische Messungen dienen dazu, sowohl die bei chemischen oder physikalischen Prozessen umgesetzten Wärmemengen, als auch die spezifische Wärme einer Substanz zu ermitteln. Dazu wird die Substanz bzw. eine Probe der Substanz in einem Kalorimeter kontrolliert erwärmt und der Wärmestrom zwischen einer Probe der Substanz und einer Temperier-Vorrichtung mittels eines thermoanalytischen Sensors verfolgt. Der Wärmestrom wird häufig über die Temperatur-Differenzen entlang des Wärmestrompfads zwischen Probe und Temperier-Vorrichtung ermittelt.

Ein Kalorimeter umfasst im Allgemeinen mindestens eine Messkammer mit einem thermoanalytischen Sensor auf dem mindestens eine Messposition ausgebildet ist. Der Sensor ist thermisch einerseits mit einer Temperier-Vorrichtung und andererseits mit einer mit dem Sensor in Kontakt stehenden Probe und/oder einer Referenz gekoppelt. Die Temperier-Vorrichtung und/oder der Sensor sind über geeignete Mittel mit mindestens einer Steuer- und/oder Regeleinheit verbunden.

Kalorimeter können zum Beispiel im Bereich der Thermoanalyse für die Untersuchung verschiedenster Substanzen eingesetzt werden. Im Allgemeinen wird eine Probe der Substanz auf eine auf dem Sensor ausgebildete Probenposition gelegt und mittels einer Temperier-Vorrichtung erwärmt, wobei sich die Probe meist in einem speziellen, verschliessbaren Tiegel befindet. Der zwischen der Temperier-Vorrichtung und der Probe fliessende Wärmestrom wird ermittelt und ausgewertet. Auf diese Weise können Informationen über die Struktur und die Zusammensetzung der Substanz ermittelt werden, wie beispielsweise die Wärmekapazität, Phasenübergänge und die Oxidationsstabilität. Weiterhin können kinetische Reaktionen verfolgt werden und/oder Reinheitsbestimmungen durchgeführt werden.

Bei kalorimetrischen Messungen, welche mit einer hohen Genauigkeit und über einen grossen Temperaturbereich hinweg durchgeführt werden sollen, wird im Allgemeinen der Wärmestrom einer Probe in Relation zum Wärmestrom einer Referenz bestimmt. Kalorimetrische Messungen können sowohl in Kalorimetern mit getrennten Messkammern als auch in solchen mit einer gemeinsamen Messkammer für mindestens eine Probe und mindestens eine Referenz durchgeführt werden.

Für genaue Messungen mit hoher Reproduzierbarkeit ist es wichtig, dass der Sensor eine hohe mechanische, chemische sowie thermische Beständigkeit aufweist. Bekannte Sensoren umfassen häufig einen scheibenförmigen Träger mit mindestens einer Thermoelement-Anordnung und mindestens einer auf dem Sensor ausgebildeten Messposition. Die Thermoelement-Anordnung wie auch die Messposition kann beispielsweise mittels der Dünnfilmtechnik oder der Dickfilmtechnik ausgebildet werden.

Sensoren, welche mit der Dünnfilmtechnik aufgebrachte Thermoelemente aufweisen, die von einer Thermoelement-Anordnung umfasst werden, sind beispielsweise aus F. X. Eder, Arbeitsmethoden der Thermodynamik, Band 2, Springer-Verlag 1983 S. 240 bekannt. Nachteilig an mittels der Dünnfilmtechnik hergestellten Sensoren ist deren häufig nur geringe mechanische und/oder chemische Beständigkeit.

Widerstandsfähigere Sensoren können mittels der Dickfilmtechnik hergestellt werden. Die DE 39 16 311 C2 offenbart einen Sensor mit jeweils einer darauf ausgebildeten Proben- und Referenz-Messposition und mindestens zwei Thermoelement-Anordnungen.

In Dickfilmtechnik hergestellte Sensoren können mehrere Lagen aufweisen, wobei eine Dickfilmschicht von der nächsten Dickfilmschicht jeweils durch eine Isolierschicht getrennt und der Sensor-Rohling nach jeder Auftragung einer Isolierschicht gebrannt bzw. gesintert werden muss. Das häufige Sintern kann allerdings die Struktur und die Eigenschaften der verwendeten Materialien verändern.

Die Herstellung von Sensoren in Dickfilmtechnik umfasst das Aufbringen von mindestens zwei unterschiedlichen Thermopasten auf einem keramischen Träger zur Ausbildung von voneinander beabstandeten Thermoelementen. Die Thermoelemente können dabei in unterschiedlichen Mustern angeordnet werden, wobei eine Temperatur-Differenz zwischen zwei voneinander beabstandeten Thermoelementen auf Grund einer Spannungsdifferenz ermittelt wird. Mindestens zwei voneinander beabstandete Thermoelemente werden von einer Messstrecke umfasst, welche wiederum von einer Thermoelement-Anordung umfasst wird.

Mit der Dünnfilmtechnik und auch mit der Dickfilmtechnik lassen sich vor allem zweidimensionale Thermoelement-Anordnungen realisieren, d. h. die Thermoelemente befinden sich hauptsächlich in einer horizontalen Schicht des Sensors. Die Wärmeströme breiten sich jedoch dreidimensional im Sensor aus. Mit einer in Dünn- oder Dickfilmtechnik ausgestalteten Thermoelement-Anordnung kann jedoch nur der Wärmestrom-Anteil, welcher sich an der Oberfläche bzw. in einer Schicht ausbreitet, vermessen werden.

Damit ergibt sich als Aufgabe der Erfindung die Bereitstellung eines thermoanalytischen Sensors für kalorimetrische Messungen, welcher im Vergleich zu herkömmlichen Sensoren eine höhere Empfindlichkeit und vor allem eine grössere strukturelle Flexibilität aufweist.

Gelöst wird diese Aufgabe durch den im Anspruch 1 definierten Sensor.

Ein thermoanalytischer Sensor für kalorimetrische Messungen wirkt mit einer Temperier-Vorrichtung zusammen und umfasst mindestens eine auf dem Sensor ausgebildete Messposition und ein Temperatur-Messelement. Zwischen dieser Messposition und der Temperier-Vorrichtung bildet sich ein Wärmestrompfad aus. Der Sensor selbst besteht im Wesentlichen aus einer strukturierten Mehrlagenschicht, welche durch Sinterung in einem einzigen Brennvorgang entstanden ist.

Die strukturierte Mehrlagenschicht umfasst eine Vielzahl von Lagen, welche jeweils individuell vor dem Sintern strukturiert werden können, wodurch die Form und die Struktur des Sensors nahezu beliebig angepasst und gestaltet werden können. Die Mehrlagenschicht wird nur einmal gesintert. Alle strukturierten Lagen erfahren somit eine identische Erwärmung, wodurch die Beeinflussung der einzelnen Lagen durch die Sinterung möglichst klein gehalten wird.

Alle Lagen der Mehrlagenschicht weisen vorzugsweise dasselbe Substratmaterial auf, so dass alle Lagen mit denselben Verfahren strukturiert und so auch die Verfahrenskosten minimiert werden können.

Der Wärmestrom kann über eine Thermoelement-Anordnung ermittelt werden, welche ein thermoelektrisches Signal liefert und entlang des Wärmestrompfades ausgebildet ist. Die Thermoelement-Anordnung umfasst mindestens eine, ein Temperatur-Messelement bildende Messstrecke, welche aus mindestens zwei Thermoelementen gebildet wird.

Der Sensor besteht im Wesentlichen aus einer strukturierten Mehrlagenschicht, welche in mindestens einer Lage mindestens eine Messstrecke mit mindestens zwei Thermoelementen aufweist, welche von einer Thermoelement-Anordnung umfasst wird.

Das Temperatur-Messelement kann auch einen elektrischen umfassen, welcher mittels der Siebdrucktechnik sowohl auf einer der Lagen der Mehrlagenschicht und/oder in der Dickfilm- oder Dünnfilmtechnik aufgebrachten Schicht ausgebildet werden kann. Ein grossflächig ausgebildeter elektrischer Widerstand kann auch als Heizwiderstand also als lokale Heizvorrichtung verwendet werden. Die Temperatur-Erfassung kann entweder ausschliesslich über elektrische Widerstände oder auch über eine Kombination von elektrischen Widerständen und Thermoelemente umfassende Messstrecken erfolgen

Der Sensor kann horizontal und/oder vertikal angeordnete mindestens zwei Thermoelemente umfassende Messstrecken aufweisen, wobei ein oder mehrere Temperatur-Messelemente, insbesondere mindestens zwei Thermoelemente umfassende Messstrecken, vorzugsweise nicht nur auf einer Lage sondern auch zwischen zwei oder mehr Lagen einer Mehrlagenschicht ausgebildet werden.

Die Ausbildung von horizontalen und/oder vertikalen Messstrecken ermöglicht es, die Ausbreitung des Wärmestroms sowohl horizontal als auch vertikal zu verfolgen. Die Anordnung der verschiedenen Messstrecken ist sehr flexibel, so dass je nach Ausgestaltung des Sensors beispielsweise auch Thermoelemente umfassende Messstrecken in den vertikalen Wänden von im Sensor integrierten Aussparungen zur Aufnahme der Probe oder Referenz ausgebildet werden können.

Zusätzlich kann eine Oberfläche der Mehrlagenschicht nach dem Sintern noch mittels Beschichtungsverfahren wie der Dünn- oder Dickfilmtechnik mit weiteren Schichten bedeckt werden, in denen ein oder mehrere mindestens zwei Thermoelemente umfassende Messstrecken ausgebildet werden können. Die Verfahren zur Erzeugung von Thermoelementen mittels der Dünn- und Dickfilmtechnik sind bekannt.

Ein Sensor, welcher eine in einem einzigen Brennvorgang entstandene Mehrlagenschicht und mindestens eine beispielsweise in Dick- oder Dünnfilmtechnik ausgebildete Schicht aufweist, verknüpft die gestalterischen Vorteile der beiden Herstellungsverfahren und kann daher sehr flexibel gestaltet werden.

Die Kombination von horizontalen und vertikalen mindestens zwei Thermoelemente umfassenden Messstrecken ermöglicht zudem eine echte dreidimensionale Anordnung der Thermoelemente. Dieses ist sehr vorteilhaft, da die Genauigkeit einer kalorimetrischen Messung von der Anzahl und Anordnung der Thermoelemente im und/oder auf dem Sensor abhängt. Es hat sich gezeigt, dass eine im Wesentlichen kreisförmige Anordnung der Thermoelemente um die Messposition herum besonders vorteilhaft ist. Idealerweise werden die Thermoelemente nicht nur auf der Oberfläche bzw. in einer Schicht nahe der Oberfläche des Sensors angeordnet, sondern räumlich im Sensor bzw. um die mindestens eine Messposition herum verteilt, um möglichst alle sich zwischen einer Probe oder Referenz und der Temperier-Vorrichtung ausbildenden Wärmeströme und Temperatur-Schwankungen erfassen zu können. Eine echte dreidimensionale Anordnung von Thermoelementen und/oder Messstrecken kann jedoch mit den bekannten Dünnfilm- und Dickfilmtechniken allein nicht realisiert werden.

Ein Thermoelement, besteht in der Regel aus zwei unterschiedlichen, mit einander in Kontakt stehenden elektrisch leitenden Materialien. Vorzugsweise werden die Thermoelemente durch Aufbringen und/oder Einbringen von metallhaltigen Thermopasten auf und/oder in den strukturierten Lagen der Mehrlagenschicht hergestellt. Die Lagen oder Schichten können beispielsweise durch Siebdrucktechniken mit mindestens zwei unterschiedlichen Thermopasten bedruckt werden oder es können in den einzelnen Lagen erzeugte Aussparungen mit verschiedenen Thermopasten verfüllt werden. Bekannte Thermoelemente umfassen Materialien wie Gold, Silber, Kupfer, Palladium und Platin sowie Legierungen dieser Metalle.

Mit der Siebdrucktechnik können neben Thermoelementen beispielsweise auch elektrische Schaltungen oder Heizwiderstände auf die Plättchen gedruckt werden, so dass zumindest ein Teil der elektrischen Schaltungen oder auch eine Art elektrische Heizvorrichtung direkt in der Mehrlagenschicht oder in einer nach dem Sintern auf die Mehrlagenschicht beispielsweise in Dickfilmtechnik aufgebrachten Schicht ausgebildet werden kann.

Die Mehrlagenschicht entsteht durch das gemeinsame Sintern einer Anordnung von einzelnen, strukturierten Substrat-Lagen. Die Grösse der einzelnen Lagen hängt von den Dimensionen und der Form des fertigen Sensors ab. Eine Substrat-Lage einer vorgegebenen Grösse und Dicke wird im Folgenden als Substrat-Plättchen bezeichnet. In Abhängigkeit der Strukturierung der einzelnen Lagen oder Plättchen ist es möglich, thermoanalytische Sensoren mit unterschiedlichen Eigenschaften und Formen auszubilden.

Die Form des Sensors kann die Empfindlichkeit, die Reproduzierbarkeit und das Zeitverhalten desselben beeinflussen, da diese Eigenschaften wesentlich durch die räumliche Verteilung der Wärmeströme im Sensor bestimmt werden. Die Empfindlichkeit des Sensors wird vor allem durch den thermischen Widerstand verschiedener Bereiche im Sensor, also die Topologie und dem Material zwischen den Thermoelementen sowie der Anordnung der Temperartur-Messelemente und/oder der Messstrecken im Sensor, beeinflusst.

Die Möglichkeiten zur Strukturierung der einzelnen Lagen hängen von den Dimensionen der einzelnen Lagen und dem verwendeten Substratmaterial ab.

Das Ausgangsmaterial oder Substrat zur Herstellung der Mehrlagenschicht wird als ungebranntes oder grünes Substrat bezeichnet und ist ein keramisches Material, wie es auch für LTCC-Keramiken (LTCC: low temperature co-fired ceramic) verwendet wird. Grünes Substrat kann entweder rollenweise oder bereits in vorkonfektionierten Folien unterschiedlicher Grösse von verschiedenen Herstellern wie z. B. DuPont oder Heraeus bezogen werden.

Die Grösse und die Dicke der einzelnen Substrat-Lagen hängen von der Grösse und auch den gewünschten Eigenschaften und der Form des fertigen Sensors ab. Häufig wird ein grünes Substrat mit einer Dicke von etwa 50 bis etwa 300 µm verwendet. Das rollenweise oder bereits als vorgeschnittene Folien vorliegende Substrat kann beispielsweise durch Laserschneiden, Sägen oder Stanzen vor der Strukturierung oder auch erst nach dem Sintern in Plättchen von der gewünschten Grösse geschnitten werden. Zum Strukturieren können die Plättchen z. B. mit Aussparungen versehen werden.

Diese Aussparungen können dann in einem weiteren Schritt mit unterschiedlichen Materialien gefüllt werden. Ausserdem können sowohl die derart vorstrukturierten Lagen wie auch unstrukturierte Lagen mit verschiedenen Materialien in unterschiedlichen Mustern bedruckt werden.

Vor dem Sintern werden die einzelnen Plättchen aufeinander gestapelt und gemeinsam laminiert, so dass sie bereits vor dem Sintern aneinander haften und sich nicht mehr gegeneinander verschieben können. Das Laminieren geschieht im Allgemeinen unter Druck und bei Temperaturen unterhalb von etwa 100°C.

Die Eigenschaften und die Form des Sensors werden durch die Abfolge der gleich oder unterschiedlich strukturierten Substrat-Plättchen vorgegeben. Grössere Hohlräume im Sensor können beispielsweise durch das Aufeinanderlegen mehrerer, an derselben Position Aussparungen aufweisender Plättchen entstehen. Beim Laminieren und Sintern kann es notwendig sein grössere Aussparungen mit einem Platzhalter zu füllen, damit die Form der Aussparung nach dem Sintern erhalten bleibt.

Auf diese Art und Weise ist es sogar möglich, eine oder mehrere rohrartige Leitungen im Sensor auszubilden. Da sich die Substrate der einzelnen Lagen beim Sintern fest mit einander verbinden, weisen diese Leitungen nach dem Sintern abgeschlossene Wände auf und können mit Temperierfluiden beschickt werden. Als Temperierfluide werden vorzugsweise Flüssigkeiten, Gase oder verflüssigte Gase eingesetzt. In Abhängigkeit des Temperierfluids und dessen Temperatur kann der Sensor so beheizt oder abgekühlt werden. Die Dichtigkeit der Leitungen kann beispielsweise durch eine nachträgliche Beschichtung der Wände noch verbessert werden.

Die Leitung für die Temperierfluide kann beliebig gestaltet werden, wobei die Leitung spiralförmig unterhalb der Messposition verlaufen oder auch eine im Wesentlichen mäanderartige Form haben kann. Die Leitungen weisen aus dem Sensor herausgehende Anschlüsse auf, über die die Leitungen von aussen mit dem Temperierfluid beschickt werden können. Für eine gleichmässige Wärmeabgabe oder Wärmeaufnahme durch das Fluid ist es notwendig, dass die Fluide durch die Leitungen fliessen, was durch bekannte Vorrichtungen wie beispielsweise Pumpen erreicht werden kann.

Die beispielsweise durch Stanzen, Laserschneiden, Schneiden oder Bohren in den einzelnen Lagen oder Plättchen entstandenen Aussparungen können auch wieder mit verschiedenen Materialien verfüllt werden. Dadurch wird an dieser Stelle in der Lage bzw. später in der Mehrlagenschicht die Materialzusammensetzung punktuell und/oder bereichsweise geändert. Wenn für das Verfüllen Materialien verwendet werden, die eine vom Substratmaterial abweichende Wärmeleitfähigkeit aufweisen, so kann dadurch die Wärmeleitfähigkeit der Mehrlagenschicht punktuell und/oder bereichsweise geändert und angepasst werden. Als Materialien können beispielsweise Metalle wie Gold, Platin, Paladium, Kupfer, Silber und Legierungen dieser Metalle verwendet werden, welche eine hohe bzw. gute Wärmeleitfähigkeit aufweisen, und/oder Gase wie beispielsweise Luft welche eine niedrige bzw. schlechte Wärmeleitfähigkeit aufweisen. Metalle werden häufig in Form von metallhaltigen Pasten eingesetzt, deren Eigenschaften an das verwendete Substrat angepasst sind.

Es können aber auch andere organische, anorganische oder metallische Materialien zum Verfüllen verwendet werden.

Die Bildung von Aussparungen und das anschliessende Verfüllen und/oder das Bedrucken der Plättchen kann auch dazu verwendet werden, mindestens eine Messposition auf dem Sensor auszubilden.

Keramische Substratmaterialien haben die Eigenschaft, dass sie beim Sintern häufig schrumpfen. Daher ist es notwendig, dass die Vielzahl der einzelnen, ungesinterten Plättchen etwas grösser ist als der fertige Sensor.

Besteht die Mehrlagenschicht aus strukturierten Lagen, so kann es sein, dass diese nicht gleichmässig schrumpfen. Eventuell muss die gesinterte Mehrlagenschicht noch mechanisch beispielsweise durch Schneiden, Schleifen oder Bohren nachbearbeitet werden.

Das Herstellungsverfahren für einen thermoanalytischen Sensor welcher im Wesentlichen eine strukturierte Mehrlagenschicht aufweist, die im Wesentlichen nur ein Substratmaterial umfasst und durch Sinterung in einem einzigen Brennvorgang entstanden ist, umfasst mehrere Schritte und ähnelt den bekannten Verfahren zur Herstellung von sogenannten LTCC-Keramiken (LTCC: low temperature co-fired ceramic).

Zuerst wird das kommerziell erhältliche grüne Substratmaterial in einzelne Plättchen mit der gewünschten Grösse geteilt, wobei das Substratmaterial sowohl rollenweise als auch bereits in vorgeschnittenen Folien vorliegen kann. Die Strukturierung der einzelnen Lagen der Mehrlagenschicht kann sowohl an einzelnen Substrat-Plättchen als auch an einem Plättchen-Array durchgeführt werden. Dieses Array wird dann in einem späteren Verfahrensschritt z. B. nach dem Laminieren oder nach dem Sintern aufgeteilt und getrennt. Zur Trennung werden Techniken wie beispielsweise das Laserschneiden, Fräsen oder Ultraschallschneiden herangezogen. Anschliessend werden die Substrat-Plättchen im Allgemeinen gründlich gereinigt. Ein Teil der Plättchen kann nach der Reinigung zunächst durch das Erzeugen von Aussparungen strukturiert werden. Diese Aussparungen können in einem weiteren Schritt zumindest teilweise wieder verfüllt werden. Die derart strukturierten und/oder unstrukturierten Plättchen können anschliessend noch mit unterschiedlichen Materialien in verschiedenen Mustern bedruckt und/oder beschichtet werden. Anschliessend werden die verschiedenen Plättchen gestapelt, der Stapel zunächst laminiert und in einem zweiten Schritt gesintert. Das Laminieren geschieht bevorzugt unter Druck oder im Vakuum bei Temperaturen unterhalb von etwa 100°C. Gesintert werden die Plättchen bei höheren Temperaturen, die typischerweise unterhalb von etwa 900°C liegen.

Der nach dem Sintern entstandene Sensor-Rohling kann noch mechanisch nachbearbeitet und das mindestens eine im Sensor ausgebildete Temperatur-Messelement kann elektrisch mit einer Messeinheit und möglicherweise auch mit einer Steuer- und/oder Regeleinheit verbunden werden.

Das mechanische Nachbearbeiten kann beispielsweise eine Trennung eines Stapels von Plättchen-Arrays, ein Glätten der Kanten des Sensors und/oder auch eine Gestaltung der endgültigen Form des Sensors durch Methoden wie Schleifen, Bohren und/oder Fräsen umfassen.

Zusätzlich kann eine Oberfläche des Sensor-Rohlings noch mit weiteren Schichten beschichtet werden, die beispielsweise mittels Dick- oder Dünnfilmtechnik aufgebracht werden. Diese Schichten können weitere Thermoelemente und/oder eine oder mehrere Messpositionen aufweisen.

Unterschiedliche Ausführungsformen eines thermoanalytischen Sensors werden nachfolgend anhand der Figuren beschrieben. Es zeigen:
- Fig. 1: eine schematische Darstellung eines thermoanalytischen Sensors mit mehreren Messstrecken im Schnitt, welcher thermisch an eine Temperier-Vorrichtung und über zwei auf dem Sensor ausgebildeten Messpositionen an einen Proben- und einen Referenztiegel gekoppelt ist;
- Fig. 2: eine Teilvergrösserung von Figur 1;
- Fig. 3: eine schematische, vergrösserte Darstellung eines thermoanalytischen Sensors mit horizontal und vertikal angeordneten Messstrecken;
- Fig. 4: eine schematische, vergrösserte Darstellung eines thermoanalytischen Sensors mit einer erhöhten Tiegelauflage;
- Fig. 5: eine schematische, vergrösserte Darstellung eines thermoanalytischen Sensors mit einer abgesenkten Tiegelauflage;
- Fig. 6: eine schematische Darstellung eines thermoanalytischen Sensors mit einer integrierten Tiegelaufnahme;
- Fig. 7: eine schematische, vergrösserte Darstellung eines thermoanalytischen Sensors, welcher Bereiche mit unterschiedlicher Leitfähigkeit aufweist;
- Fig. 8: eine schematische, vergrösserte Darstellung eines thermoanalytischen Sensors mit einer im Sensor ausgebildeten Leitung für Temperierfluide.

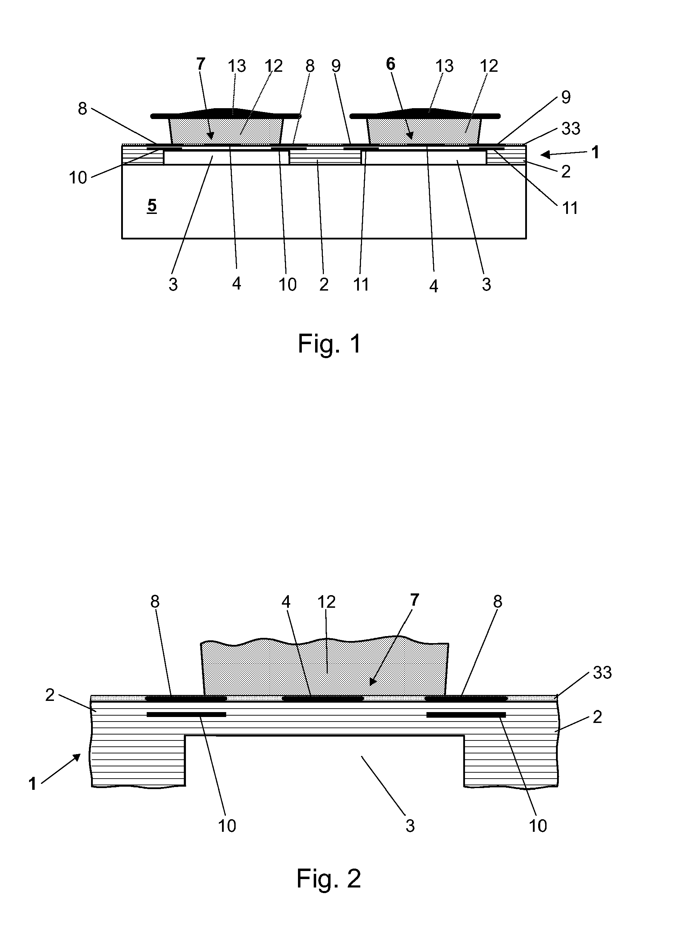

Die Figuren 1 und 2 zeigen ein bevorzugtes Ausführungsbeispiel eines thermoanalytischen Sensors für kalorimetrische Messvorrichtungen. In Figur 1 ist der im Wesentlichen scheibenförmige Sensor 1, welcher eine Kombination aus einer mehrlagigen, strukturierten LTCC-Keramik und mindestens einer in Dickfilmtechnik aufgebrachten Schicht 33 umfasst, zusammen mit einer Temperier-Vorrichtung 5 und je einem Tiegel 12 für eine Probe und eine Referenz dargestellt. Figur 2 zeigt zur besseren Übersicht eine Teilvergrösserung von Figur 1. Die Figuren 1 und 2 werden im Folgenden gemeinsam näher erläutert.

Der Sensor 1 besteht aus mehreren strukturierten Substrat-Lagen 2 aus denen durch gemeinsames Sintern bei niedrigen Temperaturen ein eine keramische Mehrlagenschicht aufweisender Sensor-Rohling entsteht. Der Sensor-Rohling wird anschliessend noch mit mindestens einer weiteren in Dickfilmtechnik aufgetragenen Schicht 33 beschichtet.

Die LTCC-Keramik ist derart ausgebildet, dass der Sensor 1 an einer Seite, der Unterseite, zwei Aussparungen 3 aufweist, wodurch die Schichtdicke des Sensors 1 in den die Aussparungen 3 enthaltenden Bereichen vermindert wird. Diese Aussparungen 3 sind luft- oder gasgefüllte Aussparungen, welche von der Temperier-Vorrichtung 5 abgeschlossen werden. Die Temperier-Vorrichtung 5 ist hier ein im Wesentlichen aus Silber bestehender Heizblock.

Die Oberfläche der LTCC-Keramik, also die der Unterseite gegenüberliegende Fläche des Sensors 1, ist im Wesentlichen planar ausgebildet und wird von mindestens einer eine strukturierte Teilschicht und eine Isolations-Teilschicht aufweisenden Schicht 33 bedeckt, welche beide in Dickfilmtechnik aufgetragen werden. Die strukturierte Teilschicht umfasst zwei Messpositionen 6, 7 und jeweils eine um jede Messposition 6, 7 herum ausgebildete Thermoelement-Anordnung mit den Messstrecken 8, 9. Die Messstrecken 8, 9 umfassen jeweils mindestens zwei Thermoelemente.

Der Sensor 1 umfasst mehrere Messstrecken 8, 9, 10, 11 welche in mindestens zwei Ebenen um die Messpositionen 6, 7 herum angeordnet sind, so dass die Temperaturschwankungen nicht nur radial um die einzelnen Messpositionen 6, 7 herum sondern auch in verschiedenen Tiefen unterhalb der Messpositionen 6, 7 erfasst werden. Mindestens eine Messstrecke 8, 9 ist in einer in Dickfilmtechnik hergestellten Schicht 33 und mindestens eine Messstrecke 10, 11 in der Mehrlagenschicht 2 ausgebildet.

Zusätzlich befindet sich unter den Tiegeln 12 noch jeweils ein grossflächiger, elektrischer Widerstand 4, welcher in diesem Ausführungsbeispiel in Dickfilmtechnik ausgestaltet ist. Der elektrische Widerstand 4 dient hier als Temperatur-Messelement zur Bestimmung einer Absolut-Temperatur.

Die LTCC-Keramik des Sensor 1 weist mehrere Substrat-Lagen 2 auf. Alle Substrat-Lagen 2 bestehen im Wesentlichen aus einem Material, wobei zur Ausbildung von mindestens zwei Messstrecken 10, 11 zumindest eine Substrat-Lage 2 mit Thermoelementen aus zwei unterschiedlichen Thermopasten versehen wurde. Die Messstrecken 10, 11 befinden sich somit im Inneren des Sensors 1.

Die Messstrecken 10, 11 werden bereits vor dem Laminieren im Sensor-Rohling durch entsprechende Strukturierung der einzelnen Substrat-Lagen ausgebildet und ermöglichen zusammen mit den Messstrecken 8, 9 eine dreidimensionale Messung des Wärmestroms zwischen der zu untersuchenden Substanz oder der Referenz und der Temperier-Vorrichtung 5.

Die räumlichen Trennung der Messstrecken 8, 10; 9, 11 ermöglicht die Ausbildung von mindestens doppelt so vielen Thermoelementen im Sensor 1 im Vergleich zu einem herkömmlichen Sensor, da die Thermoelemente auf mehreren Lagen 2 und Schichten 33 des Sensors verteilt sind, so dass der Sensor eine im Vergleich zu herkömmlichen Sensoren höhere Empfindlichkeit aufweist.

Die beiden auf dem Sensor 1 ausgebildeten Messpositionen 6, 7 definieren die Flächen des Sensors 1 auf denen während einer Messung die zu untersuchende Substanz und eine Referenz platziert werden. Im Allgemeinen wird die zu untersuchende Substanz, wie in Figur 1 gezeigt, in einen mit einem Deckel 13 verschliessbaren Tiegel 12 gegeben. Als Referenz wird entweder ein leerer Tiegel oder ein mit einer Rein- oder Referenz-Substanz gefüllter Tiegel verwendet. Es sind unterschiedliche Arten von Tiegeln bekannt, wobei für exakte kalorimetrische Messungen die thermischen, mechanischen und chemischen Eigenschaften der Tiegel bekannt sein müssen. Für kalorimetrische Messungen werden häufig Tiegel aus einem Metall oder einer Metalllegierung verwendet, wobei für die Referenz und die Probe immer identische Tiegel verwendet werden. Typische Tiegel-Materialien umfassen unter anderem Aluminium, Keramik, Stahl und Saphir.

LTCC-Keramiken zeichnen sich dadurch aus, dass sie mehrere, strukturierte Lagen eines im Allgemeinen gleichartigen Substrats umfassen, welche bei niedrigen Temperaturen einmal gemeinsam gesintert werden. Typische Sintertemperaturen liegen unterhalb von etwa 900°C. Aufgrund der relativ niedrigen Sintertemperaturen können auch Thermopasten, welche niedrig schmelzenden Metallen wie Gold, Silber, Kupfer, Platin, Palladium und Legierungen daraus aufweisen, für die Ausbildung der Thermoelemente verwendet werden, ohne dass die die aufgebrachten Thermopasten umfassenden Muster und Strukturen ihre Form verlieren.

Neben den Thermoelementpaaren 10, 11 werden auch die Aussparungen 3 direkt durch Strukturierung der ungesinterten Substrat-Lagen 2 erzeugt und nach dem Sintern nur noch mechanisch nachbearbeitet. Die mechanische Nachbearbeitung kann notwendig sein, da das Substratmaterial beim Sintern um einen gewissen Prozentsatz von etwa 10% bis 20% schrumpft.

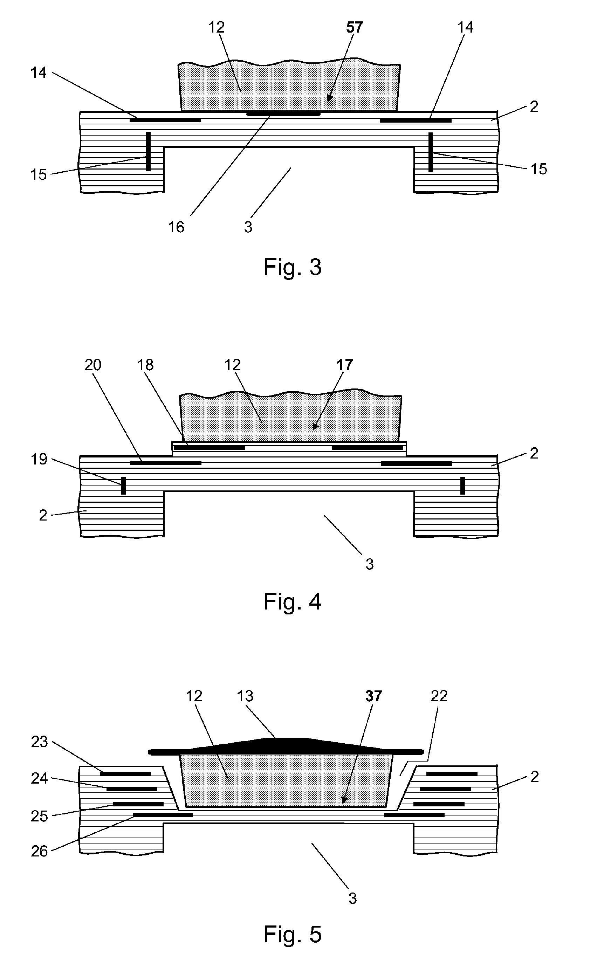

Bereits während des oben beschriebenen Herstellungsprozesses können unterschiedliche Temperatur-Messelemente wie Thermoelemente und/oder elektrische Widerstände in verschiedenen Lagen und Schichten des Sensors ausgebildet werden. Diese Thermoelemente können Messstrecken bilden, welche nicht nur parallel zur Oberfläche des Sensors sondern auch vertikal dazu ausgebildet sind, wie es in Figur 3 gezeigt ist.

Figur 3 zeigt eine Teilvergösserung eines thermoanalytischen Sensors mit vertikalen Messstrecken 15, horizontalen Messstrecken 14 und einem unter dem Tiegel 12 ausgebildeten elektrischem Heizwiderstand 16. Der Sensor selbst entspricht weitestgehend dem Sensor aus den Figuren 1 und 2, wobei für gleiche Merkmale gleiche Bezugszeichen verwendet werden.

Der elektrische Heizwiderstand 16 ist auf einer Substrat-Lage 2 der Mehrlagenschicht grossflächig ausgebildet und dient hier als lokale Widerstandsheizung für den Sensor, so dass entweder der Tiegel 12 zusätzlich zu der in Figur 1 gezeigten Temperier-Vorrichtung punktuell oder ausschliesslich über den Widerstand 16 beheizt werden kann.

Der Sensor weist vertikale Messstrecken 15 und horizontale Messstrecken 14 auf, welche vorzugsweise kreisförmig um die auf der Oberfläche des Sensors befindliche Messposition ausgebildet sind. Die vertikalen Messstrecken 15 bestehen aus mindestens zwei Thermoelementen, welche einen vertikalen Abstand zueinander haben. Die beiden vertikalen Messstrecken 15 können über mindestens zwei Lagen hinweg ausgebildet sein, so dass z. B. zwei eine Messstrecke bildende Thermoelemente in unterschiedlichen Lagen ausgebildet sind.

Die horizontalen Messstrecken 14 dienen dazu, eine Temperatur-Differenz zwischen mindestens zwei horizontal beabstandeten Thermoelementen zu erfassen.

Die Messstrecken bestehen immer aus mindestens zwei miteinander verbundenen Thermoelementen, welche jeweils zumindest zwei metallische Materialien mit unterschiedlicher Leitfähigkeit umfassen. Die einzelnen Thermoelemente können in einem beliebigen zwei- oder dreidimensionalen Muster um eine Messposition herum angeordnet sein.

Die um eine auf der Oberfläche der Mehrlagenschicht ausgebildete Messposition 57 herum angeordneten, die Messstrecken 14, 15 bildenden Thermoelemente werden in einer Thermoelement-Anordnung zusammengefasst, welche die Temperaturschwankungen entlang des sich zwischen der Messposition 57 und der Temperier-Vorrichtung (s. Figur 1) ausbildenden Wärmestrompfads erfassen kann. Das Zusammenfassen der die Messstrecken 14, 15 bildenden Thermoelemente zu einer Thermoelement-Anordnung geschieht durch geeignete elektrische Verbindungen zwischen den die Messstrecken 14, 15 bildenden Thermoelementen, wobei die verschiedenen Thermoelemente in der Regel in Serie geschaltet werden. Diese können sowohl auf die Lagen oder Schichten gedruckte Leiterbahnen als auch am fertigen Sensor angebrachte elektrische Leitungen umfassen.

Die horizontal und vertikal angeordneten Messstrecken ermöglichen eine dreidimensionale Erfassung der Wärmeströme, welche zwischen der auf der Messposition 57 befindlichen Probe oder Referenz und der Temperier-Vorrichtung (s. Figur 1) auftreten.

Sowohl die Thermoelemente der vertikalen Messstrecken 15 als auch die der horizontalen Messstrecken 14 werden bereits beim Strukturieren der Mehrlagenschicht ausgebildet.

Figur 4 zeigt eine weitere Gestaltungsmöglichkeit eines eine Mehrlagenschicht umfassenden Sensors. Die Darstellung entspricht im Wesentlichen der Darstellung in Figur 3 und gleiche Merkmale weisen dieselben Bezugszeichen auf.

Der thermoanalytische Sensor weist in diesem Ausführungsbeispiel zwei horizontale Messstrecken 18, 20 und eine vertikale Messstrecke 19 auf. Die Messstrecken 18, 19, 20 umfassen jeweils mindestens zwei Thermoelemente, welche im Wesentlichen kreisförmig um eine Messposition 17 herum in einer Mehrlagenschicht ausgebildet sind.

Die Messposition 17 befindet sind auf einem Sockel 21, welcher ebenfalls aus dem Substratmaterial der Mehrlagenschicht besteht und bereits während der Herstellung der Mehrlagenschicht erzeugt wurde, in dem vor dem Sintern zusätzlich mehrere kleinere Substrat-Plättchen zur Bildung des Sockels vor dem Laminieren auf dem Sensor-Rohling platziert wurden. Der komplette Sensor wird anschliessend laminiert und gesintert, so dass sich eine mehrlagige Keramikschicht mit den zuvor beschriebenen Merkmalen ausbildet.

Figur 5 zeigt einen Sensor mit einer Vertiefung 22 zur Aufnahme eines verschliessbaren Proben- oder Referenztiegels 12. Auf dem Boden der Vertiefung 22 ist eine Messposition 37 ausgebildet, auf der ein mit einem Deckel 13 verschliessbarer Tiegel 12 platziert wird. Der komplette Sensor besteht aus einer keramischen Mehrlagenschicht, welche mehrere horizontal angeordnete Messstrecken 23, 24, 25, 26 umfasst. Die Messstrecken 23, 24, 25, 26 sind in mehreren die Mehrlagenschicht bildenden Lagen 2 angeordnet, so dass der Tiegel 37 sowohl von der Seite als auch von unten von den Messstrecken 23, 24, 25, 26 umgeben ist.

Die Herstellung der Vertiefung 22 kann entweder durch Ausstanzen oder Ausschneiden der entsprechenden Flächen in den ungesinterten Substrat-Plättchen geschehen oder durch ein nachträgliches Ausbilden der Vertiefung 22 im gesinterten Sensor-Rohling, beispielsweise durch Fräsen oder Bohren. Die Ausbildung der Vertiefung 22 vor dem Sintern des Plättchen-Stapels wird bevorzugt, da bei einer nachträglichen Bearbeitung einzelne Thermoelemente beschädigt werden könnten.

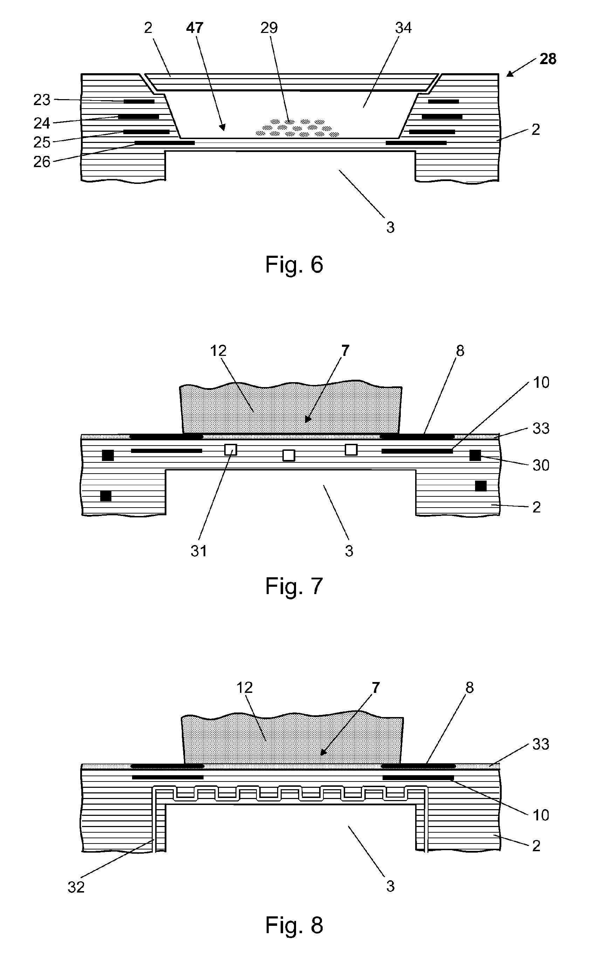

Ein weiteres Ausführungsbeispiel des Sensors, welcher einen vollständig aus einer Mehrlagenschicht bestehenden Proben- oder Referenztiegel umfasst, ist in Figur 6 dargestellt. Die Vertiefung 34 stellt hier gleichzeitig einen Tiegel zur Aufnahme einer Probe oder Referenz dar. Die Vertiefung 34 wird von einem Deckel 28 abgedeckt und verschlossen, der vorzugsweise ebenfalls aus einer aus mehreren Lagen 2 gesinterten LTCC-Keramik bestehen kann, so dass eine verschliessbare Probenkammer 34 entsteht. Eine zu untersuchende Probe 29 kann direkt in die Probenkammer 34 eingebracht werden.

Auf dem Boden der Vertiefung oder der Probenkammer 34 ist wiederum eine Messposition 47 ausgebildet, um die herum in mehreren Ebenen Messstrecken 23, 24, 25, 26 angeordnet sind. Die die Messstrecken 23, 24, 25, 26 bildenden Thermoelemente werden auch in diesem Ausführungsbeispiel durch das Aufbringen unterschiedlicher Thermopasten auf und/oder in die ungesinterten Substrat-Plättchen erzeugt, wobei die Abstände zwischen mindestens zwei beabstandeten Thermoelementen und damit die Länge der Messstrecken 23, 24, 25, 26 unterschiedlich sein kann, wie es durch die unterschiedlichen Balkenlängen der Messstrecken 23, 24, 25, 26 angedeutet ist.

Die Leitfähigkeit von mehrlagigen keramischen Strukturen, wie sie die erfindungsgemässen thermoanalytischen Sensoren umfassen, kann während der Herstellung mittels eines dem LTCC-Verfahren ähnelnden Verfahren beeinflusst werden, dadurch dass entweder ein gut Wärmeleitendes Material in bestimmte Bereiche des Sensors eingebracht wird oder dadurch dass Aussparungen erzeugt werden, welche mit einem nicht oder nur schlecht Wärmeleitenden Material wie beispielsweise Luft gefüllt sind.

Bereiche mit einer hohen Wärmeleitfähigkeit entstehen, wenn die ungesinterten Plättchen entweder teilweise mit einer Art Wärmeleitpaste bedruckt werden oder wenn in den ungesinterten Plättchen erzeugte Aussparungen mit einem Wärmeleitenden Material gefüllt werden.

Bereiche mit verminderter Wärmeleitfähigkeit umfassen Hohlräume oder Aussparungen, welche mit einem nur schlecht wärmeleitenden Material gefüllt sind. Die Grösse der Hohlräume wird einerseits durch die Grösse der in einem Plättchen erzeugten Aussparungen und andererseits durch die Zahl der übereinander liegenden Plättchen mit Aussparungen bedingt.

Ein Beispiel für einen Sensor, welcher Bereiche mit einer angepassten Wärmeleitfähigkeit aufweist ist in Figur 7 gezeigt. Die Darstellung des Sensors entspricht teilweise dem aus Figur 2, so dass gleiche Merkmale mit gleichen Bezugszeichen versehen wurden. In dem zwischen der Aussparung 3 und der Messposition 7 liegenden Bereich des Sensors befinden sich Stellen, welche ein thermisch isolierendes Material 31 aufweisen. Aufgrund des thermisch isolierenden Materials 31 weist der diese enthaltende Bereich des Sensors eine verminderte Wärmeleitfähigkeit auf, wodurch der isolierende Effekt der Aussparung 3 noch verstärkt wird.

Eine erniedrigte Wärmeleitfähigkeit bedingt, dass diese Bereiche thermisch isoliert werden, so dass sich beispielsweise die Thermoelement-Anordnungen und Wärmestrompfade nicht beeinflussen können. Bereiche mit verminderter Wärmeleitfähigkeit entstehen aufgrund von Hohlräumen 31 oder von mit Luft oder einem anderen thermisch isolierenden Material gefüllte Aussparungen 31.

Für andere Bereiche des Sensors, vor allem am Rand oder zwischen zwei Messpositionen, ist es sinnvoll, die Wärmeleitfähigkeit des Sensormaterials und damit die Wärmeübertragung zwischen der Temperier-Vorrichtung und der Messposition 7 zu erhöhen, da diese Bereiche zumindest teilweise direkt mit der Temperier-Vorrichtung in Kontakt stehen. In diesen Bereichen liegen Stellen, welche ein wärmeleitendes Material 30 aufweisen.

Figur 8 zeigt einen thermoanalytischen Sensor mit einer im Sensor ausgebildeten, hier mäanderförmigen Leitung 32 für Temperierfluide. In diesem Ausführungsbeispiel verläuft die Leitung 32 vor allem unterhalb der Messposition 7, wobei sie sich Idealerweise unter der gesamten die Messposition bildenden Fläche ausdehnt. Die Form der Leitung kann z. B. auch spiralförmig sein. Die Leitung 32 entsteht durch die Erzeugung miteinander in Verbindung stehender Hohlräume in den ungesinterten Plättchen. Beim Sintern werden die einzelnen Plättchen fest miteinander verbunden, so dass eine rohrartige Leitung 32 mit festen, definierten Wänden entsteht, durch die Temperierfluide geleitet werden können. Die Leitung 32 kann sowohl zum Kühlen als auch zum Erwärmen des Sensors bzw. der darauf stehenden Tiegel verwendet werden. Je nach Einsatzgebiet werden temperierte Flüssigkeiten oder Gase, wie beispielsweise Wasser, Luft oder flüssiger Stickstoff, durch die Leitung 32 geleitet. Zur Bewegung der Fluide dient beispielsweise eine herkömmliche, hier nicht dargestellte Pumpe, welche mit der Leitung 32 verbunden ist. Die Leitung 32 ist derart im Sensor ausgebildet, dass sie mindestens eine aus dem Sensor herausführende Öffnung umfasst.

Die vorgestellten Ausführungsformen zeigen thermoanalytische Sensoren mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, einzelne, mehrere oder alle aufgezeigten Merkmale und Eigenschaften in einem Sensor zu realisieren.

Bei dem erfindungsgemässen thermoanalytischen Sensor kann es sich je nach Ausbildung des mindestens einen Sensors um einen Sensor für kalorimetrische Messungen handeln, welche nach dem Leistungskompensationsprinzip oder nach einer Differenz-Methode arbeitet.

Die Ausführungsbeispiele umfassen vor allem thermoanalytische Sensoren mit zwei Messpositionen, einer Proben-Position und einer Referenz-Position. Es ist allerdings auch möglich, dass der Sensor mindestens eine Referenz-Position und mehr als eine Probenposition umfasst, oder dass sich mindestens eine Probe und eine Referenz auf mindestens zwei voneinander getrennten und nur über mindestens eine Messeinheit und eventuell zusätzlich eine Steuer- und/oder Regeleinheit verbundenen Sensoren befinden.

Ein erfindungsgemässer Sensor umfasst mindestens eine im Sensor angeordnete Thermoelement-Anordnung. Diese Thermoelement-Anordnung kann mit mindestens einem weiteren mittels Dickfilmtechnik auf der Oberfläche des Sensors aufgebrachten Thermoelement gekoppelt werden.

In den Figuren 1 bis 8 wurden die Sensoren immer im Längsschnitt dargestellt. Die aufgezeigten strukturellen Merkmale der Sensoren, wie beispielsweise die Thermoelemente, die Leitung und die Bereiche mit veränderter Wärmeleitfähigkeit, können entweder zwei-dimensional oder drei-dimensional ausgebildet sein.

Die die Thermoelement-Anordnung bildenden Thermoelemente können in einem beliebigen Muster um die einzelnen Messpositionen herum ausgebildet sein, wobei ein im weitesten Sinne kreisförmiges oder sternförmiges Muster bevorzugt wird. Umfasst ein Sensor mehrere, verschiedene Messstrecken bildende Thermoelemente in unterschiedlichen Lagen des Sensors, so bietet es sich an, diese bezogen auf die einzelnen Lagen gegeneinander versetzt auszubilden, so dass insgesamt der Wärmefluss in einem grösseren Bereich erfasst werden kann. Es ist auch möglich, Thermoelemente und/oder Messstrecken nicht nur innerhalb einer Lage einer Mehrlagenschicht sondern auch über mindestens zwei Lagen hinweg auszubilden.

Ein erfindungsgemässer thermoanalytischer Sensor wird vor allem bei kalorimetrischen Messungen eingesetzt, wobei es auch möglich ist die Wärmeleitfähigkeit einer Substanz und/oder eines Materials mit einem derartigen Sensor zu bestimmen.

Einzelne Messstrecken umfassen immer mindestens zwei Thermoelemente, welche aus unterschiedlichen Materialien bestehen. Zur Ausbildung von Thermoelementen auf den ungesinterten Plättchen werden beispielsweise Thermopasten verwendet, welche Gold, Platin, Silber, Palladium, Kupfer und Legierungen dieser Metalle aufweisen.

Anstelle oder auch zusätzlich zu aus Thermoelementen gebildeten Messtrecken kann eine Temperatur-Erfassung und/oder die Bestimmung einer Absoluttemperatur mit Temperatur-Messelementen erfolgen, welche die Temperatur mittels eines elektrischen Widerstands erfassen. Elektrische Widerstände können sowohl in einer oder mehreren Substrat-Lagen und/oder in einer auf der gesinterten Mehrlagenschicht beispielsweise in Dickfilmtechnik aufgebrachten Schicht ausgebildet werden.

### Bezugszeichenliste

- 1: Sensor
- 2: Substrat-Lage
- 3: Aussparung
- 4: elektrischer Widerstand (Dickfilmschicht)
- 5: Temperier-Vorrichtung
- 6: Messposition
- 7: Messposition
- 8: Messstrecke (Dickfilmtechnik)
- 9: Messstrecke (Dickfilmtechnik)
- 10: Messstrecke (Mehrlagenschicht)
- 11: Messstrecke (Mehrlagenschicht)
- 12: Tiegel
- 13: Deckel
- 14: horizontale Messstrecke
- 15: vertikale Messstrecke
- 16: elektrischer Widerstand (Mehrlagenschicht)
- 17: Messposition
- 18: horizontale Messstrecke
- 19: horizontale Messstrecke
- 20: vertikale Messstrecke
- 21: Sockel
- 22: Vertiefung
- 23: horizontale Messstrecke
- 24: horizontale Messstrecke
- 25: horizontale Messstrecke
- 26: horizontale Messstrecke
- 27: Messposition
- 28: Deckel (Mehrlagenschicht)
- 29: Substanz
- 30: Wärmeleitendes Material
- 31: Wärmeisolierender Bereich /Hohlraum
- 32: Leitung
- 33: Schicht (Dickfilm)
- 34: Vertiefung; Probenkammer
- 37: Messposition
- 47: Messposition
- 57: Messposition

## Patentansprüche

1. Thermoanalytischer Sensor für kalorimetrische Messungen, welcher mit einer Temperier-Vorrichtung zusammenwirkt und mindestens eine auf dem Sensor ausgebildete Messposition, einen zwischen der Temperier-Vorrichtung und der mindestens einen Messposition ausgebildeten Wärmestrompfad und ein Temperatur-Messelement aufweist, **dadurch gekennzeichnet, dass** der Sensor im Wesentlichen aus einer strukturierten Mehrlagenschicht besteht, die durch Sinterung in einem einzigen Brennvorgang entstanden ist.

2. Thermoanalytischer Sensor nach Anspruch 1, **dadurch gekennzeichnet, dass** der thermoanalytische Sensor mindestens eine ein thermoelektrisches Signal liefernde, entlang des Wärmestrompfads ausgebildete Thermoelement-Anordnung, welche mindestens eine mindestens zwei Thermoelemente aufweisende Messstrecke als Temperatur-Messelement umfasst.

3. Thermoanalytischer Sensor nach Anspruch 2, **dadurch gekennzeichnet, dass** mindestens eine Lage der strukturierten Mehrlagenschicht mindestens ein Thermoelement umfasst, welches zumindest einen Teil der Thermoelement-Anordnung darstellt.

4. Thermoanalytischer Sensor nach einem der Ansprüche 1 bis 3, **dadurch gekennzeichnet, dass** das Temperatur-Messelement einen elektrischen Widerstand umfasst.

5. Thermoanalytischer Sensor nach einem der Ansprüche 1 bis 4, **dadurch gekennzeichnet, dass** die strukturierte Mehrlagenschicht im Wesentlichen nur ein Substratmaterial aufweist.

6. Thermoanalytischer Sensor nach einem der Ansprüche 2 oder 3, **dadurch gekennzeichnet, dass** mindestens eine Messstrecke auf mindestens einer strukturierten Lage und/oder zwischen mindestens zwei strukturierten Lagen der Mehrlagenschicht ausgebildet ist.

7. Thermoanalytischer Sensor nach einem der Ansprüche 2, 3 oder 6, **dadurch gekennzeichnet, dass** eine Oberfläche der Mehrlagenschicht mindestens ein nach dem Sintern ausgebildetes Thermoelement, welches zumindest einen Teil der Thermoelement-Anordnung darstellt, aufweist.

8. Thermoanalytischer Sensor nach einem der Ansprüche 1 bis 7, **dadurch gekennzeichnet, dass** der Sensor in der Mehrlagenschicht ausgebildete Leitungen für Fluide, insbesondere für Temperierfluide, umfasst.

9. Thermoanalytischer Sensor nach einem der Ansprüche 1 bis 8, **dadurch gekennzeichnet, dass** der Sensor mindestens einen elektrischen Heizwiderstand umfasst.

10. Thermoanalytischer Sensor nach einem der Ansprüche 1 bis 9, **dadurch gekennzeichnet, dass** einzelne Bereiche des Sensors aufgrund der Strukturierung der einzelnen Lagen der Mehrlagenschicht unterschiedliche Wärmeleitfähigkeiten aufweisen.

11. Thermoanalytischer Sensor nach einem der Ansprüche 1 bis 10, **dadurch gekennzeichnet, dass** Bereiche mit unterschiedlicher Wärmeleitfähigkeit vorhanden sind, die Aussparungen, gefüllte Aussparungen und/oder Materialien mit unterschiedlicher thermischer Leitfähigkeit umfassen.

12. Thermoanalytischer Sensor nach einem der Ansprüche 1 bis 11, **dadurch gekennzeichnet, dass** das Substratmaterial nach dem Sintern mechanisch nachbearbeitbar ist.
